(19) Europäisches Patentamt
European Patent Office
Office européen des brevets

(11) **EP 3 286 239 B1**

(12) **FASCICULE DE BREVET EUROPEEN**

(45) Date de publication et mention
de la délivrance du brevet:
**06.03.2019 Bulletin 2019/10**

(51) Int Cl.:
*C08G 18/67* (2006.01)          *C08G 18/75* (2006.01)
*C09D 175/16* (2006.01)

(21) Numéro de dépôt: **16720467.6**

(22) Date de dépôt: **19.04.2016**

(86) Numéro de dépôt international:
**PCT/FR2016/050910**

(87) Numéro de publication internationale:
**WO 2016/170264 (27.10.2016 Gazette 2016/43)**

(54) **URETHANES AMINOACRYLATE-ACRYLATES DE HAUTE FONCTIONNALITE DERIVES DE L'ADDITION D'UN AMINOALCOOL A AMINE SECONDAIRE SUR UN ACRYLATE MULTIFONCTIONNEL**

HOCHFUNKTIONELLE AMINOACRYLAT-ACRYLAT-URETHANE AUS DER ADDITION EINES SEKUNDÄREN AMINOALKOHOLS ZU EINEM MULTIFUNKTIONELLEN ACRYLAT

HIGH FUNCTIONALITY AMINOACRYLATE-ACRYLATE URETHANES DERIVED FROM THE ADDITION OF A SECONDARY-AMINE AMINO ALCOHOL TO A MULTIFUNCTIONAL ACRYLATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2015 FR 1553506**

(43) Date de publication de la demande:
**28.02.2018 Bulletin 2018/09**

(73) Titulaire: **Arkema France
92700 Colombes (FR)**

(72) Inventeurs:
• **CICERON, Philippe
60300 Senlis (FR)**
• **BOURROUSSE, Charles
75002 Paris (FR)**

(74) Mandataire: **Killis, Andréas et al
ARKEMA France
Département Propriété Industrielle
420, rue d'Estienne d'Orves
92705 Colombes Cedex (FR)**

(56) Documents cités:
**WO-A2-2007/005351    FR-A1- 3 011 840**

**Description**

La présente invention concerne un uréthane aminoacrylate-acrylate spécifique, son procédé de préparation et ses utilisations dans des compositions réticulables de liant, en particulier comme agent synergiste de réticulation sous UV.

Il est connu de préparer des uréthanes acrylates (UA) de fonctionnalité élevée en faisant réagir des esters acryliques partiels de polyols (avec un OH libre) avec un polyisocyanate. Cependant, l'obtention desdits acrylates partiels hydroxylés est difficile pour les raisons suivantes :

- ces réactions ont de mauvais rendements d'estérification avec obligation de surcharger l'acide acrylique pour limiter les adduits de Michael et sont difficiles à contrôler concernant les spécifications d'indice d'hydroxyle $I_{OH}$ car il s'agit d'un arrêt en cours d'estérification. Les lavages spécifiques par $Na_2CO_3$ (car NaOH affecte trop le rendement) induisent des teneurs en eau et en sels résiduels et donc il y a besoin de traitements supplémentaires de séchage, sinon une partie de l'eau résiduelle réagit avec l'isocyanate transformé en amine avec formation de liaisons urée au lieu d'uréthanes. Les uréthanes acrylates en découlant sont ainsi affectés du fait des valeurs aléatoires d'$I_{OH}$, d'eau et de basicité des sous-acrylates,
- il est donc difficile de développer de nouvelles structures, multifonctionnelles en acrylates,
- les UA hexafonctionnels sont basés sur l'acrylate partiel de pentaérythritol, lequel est étiqueté nocif (Xn). Développer des UA hexafonctionnels sans acrylates de pentaérythritol est l'un des défis posés.

La présente invention cherche en particulier à mettre au point de nouveaux monomères uréthanes acrylates sans utiliser d'acrylate partiel de polyol et plus particulièrement de pentaérythritol ou de dipentaérythritol avec un isocyanate pour l'obtention d'uréthane. Lesdits nouveaux monomères acrylates ont à la fois une réactivité au moins égale à celle des uréthanes acrylates hexafonctionnels issus du triacrylate de pentaérythritol et d'un diisocyanate et en particulier une réactivité plus élevée surtout sous rayonnement LED (diodes électro luminescentes). Ils ont également un très bon compromis entre dureté et flexibilité et donnent lieu à un retrait volumique très faible après réaction par rapport aux uréthanes acrylates connus de l'état de la technique mais sans les inconvénients exposés.

Plus particulièrement, la solution proposée par la présente invention est basée sur l'utilisation avec un polyisocyanate d'un aminoacrylate-acrylate hydroxylé, ledit aminoacrylate correspondant au groupement de formule =N-$CH_2$-$CH_2$-$CO_2$-, produit issu de l'addition partielle de Michael d'un aminoalcool, ayant une fonction amine secondaire (un seul OH pour un seul -NH-) sur un acrylate multifonctionnel (MFA), ceci dans des conditions spécifiques définies ci-dessous selon la présente invention et permet les avantages techniques suivants par rapport aux monomères correspondants de l'état de la technique :

- Meilleur compromis entre réactivité, dureté et flexibilité.
- Retrait quasi inexistant avec une meilleure adhésion sur substrats non-poreux.
- Pas besoin d'étape de préparation d'ester acrylate partiel hydroxylé dont le rendement est faible, au contraire dans la présente invention, le rendement de la réaction est total (à 100%) sans produits à éliminer (comme dans le cas de l'estérification), sans besoin de catalyseur, l'$I_{OH}$ est parfaitement contrôlé (pour 1 NH additionné sur la double liaison acrylate, il y a formation d'un aminoacrylate hydroxylé porteur de fa-1 acrylates, pour fa étant la fonctionnalité en acrylates dudit MFA) par les proportions mises en jeu et non par la conversion, avec des caractéristiques finales contrôlées et prédictibles à partir desdites proportions.
- Indice d'amine élevé (dans le cas d'un aminoacrylate sans amine tertiaire et correspondant donc à l'amine tertiaire de cet aminoacrylate) allant de 15 à 350, de préférence de 20 à 300 et plus préférentiellement de 30 à 250 mg KOH/g.

Dans le cas de présence éventuelle d'une amine tertiaire, ledit indice d'amine (indice total) sera par conséquent supérieur aux valeurs citées ci-haut.

Le premier objet de la présente invention concerne donc d'abord un uréthane aminoacrylate-acrylate spécifique.

Un autre objet concerné est un procédé spécifique de préparation dudit uréthane amino-acrylate acrylate.

Ensuite, est concernée une composition réticulable de liant à base dudit uréthane aminoacrylate-acrylate utilisé comme liant.

Un autre objet concerne l'utilisation spécifique dudit uréthane aminoacrylate-acrylate comme liant dans une composition réticulable de liant.

Finalement, la présente invention concerne le produit fini obtenu à partir dudit uréthane aminoacrylate-acrylate.

Donc, le premier objet de la présente invention concerne un uréthane aminoacrylate-acrylate, lequel comprend au moins deux fonctions uréthanes liées à un groupement aminoacrylate, ce dernier étant porteur d'un ou de plusieurs groupements acrylates, de préférence d'au moins 2 et plus préférentiellement d'au moins 3 groupements acrylates et, en ce qu'il dérive de la réaction de a) un aminoacrylate hydroxylé porteur d'un ou de plusieurs groupements acrylates avec b) un polyisocyanate, les groupements hydroxy étant en excès par rapport aux groupements isocyanates dudit polyisocyanate b) avec,

- ledit aminoacrylate a) étant le produit d'addition de a1) un aminoalcool porteur d'un groupement hydroxy (ou « alcool ») et d'un groupement amine secondaire et en option porteur à la fois d'un groupement amine secondaire et tertiaire, sur a2) au moins un acrylate multifonctionnel de fonctionnalité ou de fonctionnalité moyenne en nombre en acrylates par mole fa2, allant de 2 à 6 par mole, avec a2) étant en excès stoechiométrique de groupements acrylates par rapport aux groupements amines secondaires -NH dudit aminoalcool a1), avec un rapport r1 en groupements r1 = acrylate /NH > 1, en particulier d'au moins 1,2, plus particulièrement d'au moins 1,5 et encore plus particulièrement d'au moins 2,0
- le rapport r2 en groupements r2 = OH / NCO > 1 et jusqu'à 1,4, en particulier allant de 1,05 à 1,4 et de préférence de 1,05 à 1,2
- ledit uréthane aminoacrylate-acrylate contenant un taux $t_{Aa}$ de groupements aminoacrylates, exprimé en milliéquivalent par gramme (mEq/g) dudit uréthane aminoacrylate-acrylate, allant de 0,3 à 6,0, de préférence de 0,4 à 5,0 et plus préférentiellement de 0,6 à 4,0.

Selon une option plus particulière, ledit uréthane aminoacrylate-acrylate a une densité $d_A$ de groupements acrylates, exprimé en mEq par g dudit uréthane aminoacrylate-acrylate (mEq/g), allant de 0,4 à 12,0, de préférence de 1,3 à 12,0, plus préférentiellement de 2,0 à 12,0. Plus particulièrement, il peut avoir une fonctionnalité moyenne en nombre en acrylate $f_{Acr}$ allant de 0,4 à 60, de préférence de 1 à 15, plus préférentiellement de 2 à 15, encore plus préférentiellement de 3 à 10 acrylates par mole dudit uréthane aminoacrylate-acrylate.

Selon une préférence, le rapport r1 en groupements r1 = acrylate / NH varie de $fa_2/(fa_2-1)$ à $2.fa_2$, de préférence de $fa_2/(fa_2-2)$ à $1,5.fa_2$ quand $fa_2$ est d'au moins 3, avec $fa_2$ étant la fonctionnalité ou fonctionnalité moyenne en nombre, si mélange, dudit acrylate a2) exprimée en acrylate/mole de a2).

Ledit polyisocyanate b) peut avoir une fonctionnalité fb ou fonctionnalité moyenne en nombre (si mélange) allant de 2 à 4, de préférence de 2 à 3,5.

Ledit polyisocyanate peut être un mélange d'au moins deux polyisocyanates de fonctionnalité identique ou différente. Dans un tel cas, ladite fonctionnalité fb correspond à la fonctionnalité moyenne en nombre par mole de polyisocyanate. Ladite fonctionnalité moyenne en nombre sera donnée par la relation suivante :

$$fb = \Sigma_i \, (x_i.fb_i)$$

avec $x_i$ et $fb_i$ étant respectivement la fraction molaire et la fonctionnalité du polyisocyanate i, avec somme $\Sigma_i$ réalisée sur l'ensemble des polyisocyanates i dudit mélange constituant le polyisocyanate b).

Ledit polyisocyanate b) est défini par la formule générale (1) suivante :

$$R_4(N=C=O)_{fb} \qquad (1)$$

Ledit acrylate a2) peut également être un mélange d'au moins deux acrylates a2) de fonctionnalité identique ou différente. Une relation analogue reste valable dans le cas de mélange d'acrylates multifonctionnels (MFA) a2) pour leur fonctionnalité moyenne en nombre fa2 par rapport à la fraction molaire $x_i$ et la fonctionnalité $fa2_i$ de l'acrylate i.

Ledit acrylate a2) est défini par la formule générale (2) suivante :

$$R_3(OC=OCH=CH_2)_{fa2} \qquad (2)$$

Les aminoalcools a1) peuvent également être un mélange d'au moins deux aminoalcools tels que définis selon a1) mais cela n'affecte pas leur fonctionnalité en -NH- ou en OH, toujours strictement égale à 1 OH et 1 NH par mole.

Par le choix spécifique du mélange de b) et/ou de a1) et/ou de a2), il est possible d'ajuster plus finement les performances finales d'application desdits monomères de sorte à trouver un meilleur compromis desdites performances, difficile à obtenir autrement.

Ledit polyisocyanate b) est sélectionné en particulier parmi les polyisocyanates aliphatiques, cycloaliphatiques ou aromatiques ou leurs dérivés trimères biurets ou triisocyanurates ou lesdits polyisocyanates modifiés allophanates (porteurs d'au moins un groupement allophanate). Le groupement allophanate est créé par réaction d'un polyisocyanate en excès avec un monoalcool, avec une deuxième molécule de polyisocyanate réagissant avec le groupement uréthane formé.

Concernant ledit aminoalcool a1), il est de préférence sélectionné parmi les aminoalcools définis par la formule générale (3) suivante :

$$R_1\text{-NH-}R_2\text{-OH} \qquad (3)$$

avec

R$_1$ étant alkyle en C$_1$ à C$_4$ et
R$_2$ étant un alkylène en C$_2$ à C$_{12}$, de préférence en C$_2$ à C$_6$ ou cycloalkylène ou aralkylène.

Plus particulièrement, ledit aminoalcool est choisi parmi : N-méthyl éthanol amine (CAS 109-83-1), N-isobutyl éthanol amine (CAS 35265-04-4), N-éthyl éthanol amine (CAS 110-73-6), N-butyl éthanol amine (CAS 111-75-1), N-(2-Hydroxyéthyl) Pipérazine) (CAS 103-76-4).

Concernant ledit acrylate multifonctionnel a2), de préférence, il est un monomère acrylate multifonctionnel (MFA) qui est un ester acrylate d'un alkylène polyol en C$_2$ à C$_{10}$, ledit alkylène pouvant comprendre une liaison éther (une seule) ou d'un polyol cycloaliphatique, lesdits polyols ayant une fonctionnalité de 2 à 6.

Comme exemples plus particuliers d'acrylates multifonctionnels a2) convenables selon la présente invention, on peut citer :

- comme acrylates d'alkylène polyols en C$_2$ à C$_{10}$ : le diacrylate d'éthylène glycol, de propylène glycol, de butane diol, de pentanediol ou d'hexane diol,
- le triacrylate de glycérol ou de triméthylol propane,
- le tétracrylate de pentaérythritol, d'érythritol, de ditriméthylol propane ou de diglycérol,
- le penta acrylate de xylitol,
- l'hexa acrylate de dipentaérythritol ou de sorbitol.

Plus particulièrement, ledit acrylate multifonctionnel a2) est un mélange d'au moins deux acrylates multifonctionnels et en option ledit aminoalcool a1) est également un mélange d'au moins deux aminoalcools.

L'uréthane aminoacrylate-acrylate selon la présente invention peut être décrit comme le mélange de 2 constituants : un aminoacrylate hydroxylé AH) résiduel et un uréthane acrylate UA) d'autre part, ces 2 constituants AH) et UA) étant définis par les formules générales (4) et (5) suivantes :

$$\text{AH}) : \text{HOR}_2(\text{R}_1)\text{NCH}_2\text{CH}_2\text{COOR}_3(\text{OCOCH=CH}_2)_{(r1\text{-}1)} \qquad (4)$$

$$\text{UA}) : \text{R}_4(\text{NHC=OX})_{fb}, \text{ avec } X = \text{OR}_2(\text{R}_1)\text{NCH2CH2COOR}_3(\text{OCOCH=CH}_2) \qquad (5)$$

Les fractions molaires $x_{AH}$ et $x_{UA}$ respectives de AH) et de UA) peuvent être calculées par les relations suivantes :

$$x_{AH} = fb.(r2 - 1)/[1 + fb.(r2 - 1)]$$

$$x_{UA} = 1/[1 + fb.(r2 - 1)]$$

R$_1$, R$_2$, R$_3$ et R$_4$, fa, fb, r1 et r2 sont tels que définis ci-haut dans les relations qui précèdent.

La fraction molaire $x_{UA}$ peut varier dans une plage allant de 0,35 à 0,99, en particulier de 0,55 à 0,90 et plus particulièrement de 0,70 à 0,90.

L'uréthane aminoacrylate-acrylate selon la présente invention a de préférence une viscosité à 60°C mesurée par la méthode de viscosité Noury selon la norme AFNOR XP.T51-213 (voir exemples) variant de 1 à 20 et de préférence de 5 à 15 Pa.s.

La masse moléculaire moyenne en nombre Mn est déterminée par calcul selon la relation suivante :

$$Mn = r1.r2/fa2).fb.MM1 + r2.fb.MM2 + MM3 \qquad (6)$$

MM1, MM2 et MM3 étant les masses molaires respectives de l'acrylate a2), de l'amine hydroxylée (aminoalcool)a1) et du polyisocyanate b).

Mn peut varier de 400 à 1500 g/mole, de préférence de 600 à 4000 g/mole et plus préférentiellement de 700 à 2000 g/mole.

La fonctionnalité moyenne en nombre en acrylate $f_{Acr}$ (en Eq acrylate / mole) est déterminée par calcul selon la relation suivante :

$$f_{Acr} = r2.fb.(r1 - 1)$$

Le taux de groupement aminoacrylate $t_{Aa}$ (en mEq/g) est calculé selon :

$$t_{Aa} = 1000.r2.fb/M$$

La densité en acrylate $d_A$ (en mEq d'acrylate par g) est calculée selon :

$$d_A = 1000.r2.fb.(r1-1)/M$$

Les uréthanes aminoacrylate-acrylates de la présente invention peuvent être obtenus par un procédé spécifique de préparation comprenant les étapes suivantes :

i) préparation dudit aminoacrylate hydroxylé a) par réaction d'addition de Michael dudit aminoalcool a1) sur ledit acrylate multifonctionnel a2), ce dernier étant en excès stoechiométrique par rapport aux groupements NH dudit aminoalcool a1) avec le rapport de groupements r1 = acrylates/N-H étant > 1, en particulier d'au moins 1,2, plus particulièrement d'au moins 1,5 et encore plus particulièrement d'au moins 2,0
ii) réaction dudit aminoacrylate a) de l'étape i) avec ledit polyisocyanate b), avec un rapport r2 = OH/NCO allant de 1,05 à 1,40, de préférence de 1,05 à 1,20, pour obtenir ledit uréthane aminoacrylate-acrylate.

Toutes les variantes citées ci-haut par rapport à l'uréthane aminoacrylate-acrylate selon la présente invention et concernant le choix desdits composants a) et b) peuvent également s'appliquer audit procédé en tant que deuxième objet de la présente invention.
Un autre objet important de la présente invention concerne une composition réticulable de liant organique, laquelle comprend comme liant, au moins un uréthane acrylate tel que défini ci-haut ou obtenu par un procédé tel que défini selon la présente invention.
De préférence, ladite composition peut comprendre en plus dudit liant au moins un diluant réactif choisi parmi les monomères (méth)acrylates mono ou multifonctionnels, de préférence parmi les monomères acrylates multifonctionnels, plus particulièrement lesdits monomères multifonctionnels ayant une fonctionnalité allant de 2 à 6, de préférence de 2 à 4.
Plus particulièrement, cette composition est réticulable par rayonnement ou par voie peroxyde ou par voie mixte ou par voie d'addition de Michael avec une polyamine.
« Voie mixte » signifie ici la combinaison d'une voie par rayonnement et d'une voie par peroxyde. « La voie peroxyde » signifie une voie à basse température avec utilisation de peroxydes et en particuliers d'hydroperoxydes organiques en présence d'un accélérateur de décomposition qui est en fait un réducteur du peroxyde, en particulier de l'hydroperoxyde sans aucun besoin de chauffage. Le choix de la voie de réticulation dépendra du type d'application finale de ladite composition.
Plus particulièrement, ladite composition est réticulable sous rayonnement choisi parmi, UV, LED, laser, faisceau d'électrons, en particulier LED. Ladite composition se caractérise plus particulièrement par sa réactivité élevée sous rayonnement LED.
En relation avec son application, ladite composition peut être une composition de revêtement, en particulier d'encre, vernis, peinture ou d'adhésif ou une composition pour impression 3D, une composition pourfabrication d'objets 3D par couches successives, une composition d'agents d'étanchéité, une composition de scellement chimique, une composition de béton ou finalement une composition de composite, en particulier avec renfort fibreux.
Un autre objet de la présente invention concerne l'utilisation d'un uréthane aminoacrylate-acrylate tel que défini ci-haut ou obtenu par un procédé selon la présente invention dans des compositions réticulables. Cette utilisation concerne en particulier les revêtements, l'impression 3D, la fabrication d'objets 3D par couches successives, les agents d'étanchéité, le scellement chimique, le béton ou les composites.
Plus particulièrement selon cette utilisation, ledit uréthane aminoacrylate-acrylate de l'invention est utilisé comme agent synergiste de réticulation dans des compositions réticulables sous rayonnement, en particulier UV, laser ou LED, en particulier LED.
De préférence, ledit uréthane aminoacrylate-acrylate est utilisé comme liant agent synergiste de réticulation sous UV
Finalement, fait également partie de l'invention un produit fini réticulé lequel dérive (ou résulte) de la réticulation d'au moins un uréthane aminoacrylate-acrylate tel que défini ci-haut ou obtenu par le procédé de l'invention ou d'une composition réticulable le contenant comme définie ci-haut selon l'invention.

Plus particulièrement, ledit produit est choisi parmi : revêtement, en particulier peinture, vernis, encre, adhésif ou parmi : produit obtenu par impression 3D, produit 3D obtenu par couches successives, joint d'étanchéité ou de scellement chimique ou béton ou composite.

Les exemples exposés ci-dessous sont donnés à titre d'illustration de la présente invention et de ses performances et ne limitent en rien sa couverture.

EXEMPLES

Tableau 1 : matières premières utilisées

| Nom commercial (REF) | Nom chimique | Nom abrégé | Fournisseur | Fonction selon l'invention | Fonctionnalité |
|---|---|---|---|---|---|
| Penta radcure | Pentaérythritol | PET | Perstorp | Polyol | 4 |
| DiTMP | DiTriméthylol Propane | DiTMP | Perstorp | Polyol | 3 |
| Acide acrylique glacial | Acide acrylique | AA | Arkema | Acide acrylique | 1 |
| Toluène | Toluène | Tol | TOTAL | Solvant | |
| MSA E-pur | Acide méthane sulfonique | AMS | Arkema | Catalyseur | |
| Paraméthoxy Phénol écailles | Ether Méthylique d'Hydroquinone | EMHQ | Rhodia | Inhibiteur | |
| SR351 | Tri méthylol propane TriAcrylate | TMPTiA | Arkema Sartomer | acrylate a2) | 3 |
| SR295 | Pentaérythritol TétraAcrylate | PETTA | Arkema Sartomer | acrylate a2) | 4 |
| SR355 | DiTriMéthylolPropane TétraAcrylate | DiTMPTA | Arkema Sartomer | acrylate a2) | 4 |
| N-Méthyl EthanolAmine | N-Méthyl EthanolAmine | NMEA | BASF | AminoAlcool a1) | 1 |
| IPDI | Isophorone Diisocyanate | IPDI | Vencorex | Isocyanate b) | 2 |
| TIB KAT216 | DiOctyle Dilaurate d'étain | DOTL | TIB | Catalyseur | |
| TriPhényle Phosphite | TriPhényle Phosphite | TPPte | AKZO Nobel | Stabilisant | |
| Phénothiazine | Thiodiphenylamine | PTZ | Clariant | Stabilisant | |
| BHT | BisTertioButyle HydroxyToluène | BHT | Innochem | Stabilisant | |
| Speedcure TPO-L | 2,4,6-trimethylbenzoilphenyl-phosphinic acid éthyl ester | TPO | Lambson | Photo-Initiateur | |
| Speedcure DETX | 2,4-diethylthioxanthone | DETX | Lambson | Photo-Initiateur | |
| Darocur® 1173 | 2-Hydroxy-2-Methyl-Phenyl-Propane-1-one | DC1173 | BASF | Photo-Initiateur | |

1) Préparation des produits de référence (état de l'art)

Référence 1

Acrylate hydroxylé AH-1

Dans un réacteur de 1 litre équipé d'un agitateur à ancre et surmonté d'un florentin avec son réfrigérant (dispositif permettant le soutirage continu de l'eau d'estérification sous reflux de solvant), d'une entrée d'air (barbotage d'air) et d'une sonde thermométrique, on introduit : 468,3 g d'acide acrylique (AA) (6,50 mole), 221,1 g de pentaérythritol (PET) (1,63 mole), 300,0 g de toluène, 10,0 g d'acide méthane sulfonique en solution aqueuse à 70% (AMS-aq) (0,07 mole) et 0,60 g d'éther méthylique d'hydroquinone (EMHQ).

Le mélange réactionnel est mis sous reflux jusqu'à ce que le milieu réactionnel ait un indice d'acide de 66 mg KOH/g (soit 8,5% d'AA résiduel). Cela correspond à environ 10 heures de reflux, le milieu réactionnel passant ainsi d'une température de 100°C (début d'ébullition) à 110°C au moment de l'arrêt de l'estérification effectué par refroidissement du milieu réactionnel (après avoir distillé environ 95 ml d'eau). On ajoute alors 500,0 g de toluène.

Cette phase organique est neutralisée sous agitation à 50°C pendant 30 minutes par 260,0 g d'une solution aqueuse de carbonate de sodium à 20%. On laisse décanter pendant 2 heures et, après élimination de la phase aqueuse (phase inférieure), on ajoute à la phase organique (phase supérieure) 30 g d'une solution aqueuse de carbonate de sodium à 20%. On agite pendant 30 minutes à 50°C, puis on laisse décanter pendant 2 heures. Après rejet de la phase aqueuse (phase inférieure), la phase organique a une teneur en AA résiduel < 0,1%. Si l'AA résiduel est supérieur à cette valeur, on traite à nouveau la phase organique par 30 g d'une solution aqueuse de carbonate de sodium à 20% avec les mêmes temps et température d'agitation et de décantation. On ajoute à la phase organique (phase supérieure) 30 g d'eau déminéralisée. On agite pendant 30 minutes à 50°C, puis on laisse décanter pendant 2 heures. Après rejet de la phase aqueuse (phase inférieure), la phase organique a un pH < 9 (papier pH). Si le pH est supérieur à cette valeur, on traite à nouveau la phase organique par 30 g d'eau déminéralisée avec les mêmes temps et température d'agitation et de décantation.

La phase organique est additionnée de 1,0 g d'éther méthylique d'hydroquinone (EMHQ), puis placée en évaporateur rotatif. On distille la phase organique sous vide en portant la température à 80°C, puis à 95°C et en abaissant la pression progressivement à 200 mBar, puis 100 mBar jusqu'à élimination complète du toluène (stagnation du volume distillé ; % résiduel de toluène < 0,1%).

On obtient un produit polyacrylate hydroxylé AH-1 ayant les caractéristiques suivantes :

| | |
|---|---|
| Aspect : | limpide |
| Viscosité à 25°C : | 900 mPa.s |
| Indice d'OH du produit : | 120,0 mg KOH/g |

Uréthane acrylate de référence Ref-U1

Dans un réacteur de 1 litre équipé d'un agitateur à ancre, d'une entrée d'air (barbotage d'air) et d'une sonde thermométrique, on introduit : 834,24 g de l'acrylate hydroxylé AH-1 ci-haut (1,7845 équivalent OH), 2,0 g de BHT, 0,5 g de DOTL. Le mélange étant porté à 60°C, on introduit en 1 heure 164,7 g d'IPDI (1,4871 équivalent NCO) en augmentant régulièrement la température à 90°C. On maintient le mélange à cette température en contrôlant régulièrement l'indice d'isocyanate (INCO), jusqu'à ce que la valeur de ce dernier soit inférieure à 0,5 mg KOH/g. On obtient un uréthane acrylate référencé Ref-U1 ayant les caractéristiques suivantes :

| | |
|---|---|
| Aspect : | limpide (visuel) |
| Viscosité à 60°C : | 2,2 Pa.s |

Référence 2

Acrylate hydroxylé AH-2

On procède comme pour la référence AH-1 sauf le remplacement du Pentaérythritol par le DiTMP en même quantité molaire, le critère d'arrêt de l'estérification étant un indice d'acide du mélange réactionnel de 52 mg KOH/g (soit 6,7% d'AA résiduel).

On obtient un produit polyacrylate hydroxylé AH-2 ayant les caractéristiques suivantes :

Aspect :                          limpide
Viscosité à 25°C :                1000 mPa.s
Indice OH du produit :            120,0 mg KOH/g

### Uréthane acrylate de référence Ref-U2

On procède comme pour la référence Ref-U1 sauf le remplacement de l'acrylate hydroxylé AH-1 par l'acrylate hydroxylé AH-2 en même quantité en équivalent OH. On obtient un uréthane acrylate référencé Ref-U2 ayant les caractéristiques suivantes :

Aspect :                limpide
Viscosité à 60°C :      2,3 Pa.s

### 2) Préparation des produits selon l'invention

### 2.1) Mode opératoire pour exemples selon l'invention

Les rapports r1 et r2 cités ci-dessous dans les exemples correspondent :

- r1, au rapport d'équivalents Acrylate / NH
- r2, au rapport d'équivalents OH / NCO

### Exemple 1 : Préparation d'un uréthane aminoacrylate-acrylate (UAmAA-1)

Dans un réacteur de 1 litre équipé d'un agitateur à ancre, d'une entrée d'air (barbotage d'air pour l'inhibition de la polymérisation radicalaire), d'une ampoule de coulée et d'une sonde thermométrique, on introduit à température ambiante : 634,66 g de TMPTA (2,144 mole), 2,0 g d'EMHQ (2000 ppm), 2,0 g de TPPte (2000 ppm) et 0,2 g de PTZ (200 ppm).

Le mélange réactionnel est porté progressivement à 50°C jusqu'à dissolution complète des stabilisants. On ajoute alors progressivement par l'ampoule de coulée (goutte à goutte pendant une heure) 160,81 g de NMEA (2,144 mole ; r1 = 3,00). Le mélange réactionnel est maintenu à 50°C jusqu'à conversion complète des amines secondaires, c'est-à-dire jusqu'à un indice d'amine total corrigé du taux d'amine tertiaire $I_{AmT} - I_{Am3} < 0,5$ mg KOH/g, soit pendant environ 2 heures.

On ajoute alors 198,33 g d'IPDI (0,893 mole ; r2 = 1,20) par l'ampoule de coulée en une heure en maîtrisant l'exothermie par une élévation de température de 50 à 100°C, puis on maintient le mélange réactionnel à cette température jusqu'à stabilisation de la viscosité à 60°C et INCO < 0,3 mg KOH/g, soit environ 4 heures.

On obtient un produit UAmAA-1 ayant les caractéristiques suivantes :

Aspect :                                limpide
Viscosité :                             7,5 Pa.s à 60°C
Taux d'aminoacrylate :                  2,16 mEq/g (soit un indice d'amine de 121 mg KOH/g)
Taux d'acrylate :                       4,31 mEq/g
Fonctionnalité moyenne en nombre :      4,80 acrylates par mole.

### Exemple 2 : Préparation d'un uréthane aminoacrylate-acrylate (UAmAA-2)

On procède comme dans l'exemple 1 sauf le remplacement du TMPTA par le DiTMPTA en même quantité molaire avec r1 = 4,0 et r2 = 1,2.

### Exemple 3 : Préparation d'un uréthane aminoacrylate-acrylate (UAmAA-3)

On procède comme dans l'exemple 1 sauf le remplacement du TMPTA par le PETTA en même quantité molaire avec r1 = 4,0 et r2 = 1,2.

Les caractéristiques de ces 3 exemples et des 2 produits de référence sont rassemblées dans le tableau 2 ci-dessous.

Tableau 2 : références et exemples selon l'invention

| Paramètre | Unité | Ref-U1 | Ref-U2 | UAmAA-1 | UAmAA-2 | UAmAA-3 |
|---|---|---|---|---|---|---|
| Acrylate a2) | | AH-1 | AH-2 | TMPTA | DiTMPTA | PETTA |
| Aminoalcool a1) | | - | - | NMEA | NMEA | NMEA |
| Isocyanate b) | | IPDI | IPDI | IPDI | IPDI | IPDI |
| MM1 | g/mole | 298 | 412 | 296 | 482 | 352 |
| MM2 | g/mole | - | - | 75 | 75 | 75 |
| MM3 | g/mole | 222 | 222 | 222 | 222 | 222 |
| r1 | | - | - | 3 | 4 | 4 |
| r2 | | 1,00 | 1,00 | 1,20 | 1,20 | 1,20 |
| $fa_2$ | Eq Acrylate/mole | 4 | 4 | 3 | 4 | 4 |
| fb | Eq NCO/mole | 2 | 2 | 2 | 2 | 2 |
| Mn | g/mole | 818 | 1046 | 1112,4 | 1558,8 | 1246,8 |
| Viscosité (60°C) | Pa.s | 2,2 | 2,1 | 7,5 | 13,0 | 13,2 |
| $t_{Aa}$ | Eq AmAcr/mole | - | - | 2,16 | 1,54 | 1,92 |
| $f_{Acr}$ | Eq Acr/mole | 6 | 6 | 4,80 | 7,20 | 7,20 |
| $d_A$ | mEq Acr/gramme | 7,33 | 5,74 | 4,31 | 4,62 | 5,77 |
| $I_{AmT}$ | mg KOH/g | 0 | 0 | 121,0 | 86,4 | 108,0 |

## METHODES DE MESURE ET DE CARACTERISATION

Détermination de l'aspect : On observe visuellement le produit à la lumière du jour, à travers un flacon en verre blanc de 60 ml et on distingue si le produit est :

- Limpide : si aucune turbidité, il est comparable à l'eau,
- Voilé : ne permettant plus une vision nette à travers le flacon,
- Trouble : flacon opaque, aucune image ne peut être perçue à travers le flacon.

Détermination de la viscosité Noury: On mesure le temps de parcours, dans le liquide à caractériser, d'une bille d'acier soumise à sa gravité. La norme AFNOR XP.T51-213 précise en particulier la géométrie du récipient, le diamètre de la bille (2 mm) et le parcours de la bille (104 mm). Dans ces conditions, la viscosité dynamique est proportionnelle au temps de parcours de la bille, avec un temps de parcours de 1 seconde correspondant à une viscosité de 0,1 Pa.s.

Détermination de l'indice d'hydroxyle $I_{OH}$ : On exprime l'indice d'hydroxyle du produit à caractériser en mg KOH équivalent par gramme de produit. Pour cela, on effectue un dosage acido-basique en retour de l'excès d'anhydride acétique par rapport aux fonctions hydroxy dans les conditions suivantes : un poids exact p de produit (environ 1 gramme) est dissout dans exactement 10 ml de solution acétylante (mélange de 555 ml d'acétate d'éthyle, 60 ml d'anhydride acétique et 7 g d'acide para-toluène sulfonique monohydrate). On laisse réagir pendant 30 minutes à 90°C. Après refroidissement, on ajoute environ 2 ml d'eau qu'on laisse réagir 2 minutes à température ambiante. On ajoute alors environ 10 ml de solution hydrolysante (mélange de 600 ml de pyridine et 400 ml d'eau) qu'on laisse réagir 5 minutes à température ambiante. On ajoute environ 60 ml de solvant (mélange de 666 ml de n-butanol et 333 ml de toluène). On dose ensuite l'excès d'acide acétique (libéré par l'hydrolyse de l'anhydride acétique en excès par rapport aux fonctions hydroxy à acétyler) par de la potasse méthanolique de titre normal N (Eq/l) exact d'environ 0,5 N. Le point équivalent est détecté par une électrode combinée (LiCl METROHM référence 6.0222.100) asservissant une burette automatique (appareil de titration automatique « 716 DMS Titrino »® Metrohm) délivrant le volume équivalent $V_E$. Un essai à blanc (identique au protocole ci-haut sans le produit à analyser) est également réalisé avec un volume équivalent $V_B$. On calcule l'indice d'hydroxyle ($I_{OH}$) par la formule suivante :

$$I_{OH} = I_A + [(V_B - V_E).N.56,1 / p]$$

avec $V_E$ et $V_B$ en ml, N en Eq/l et p en gramme.

Détermination de l'indice d'acide $I_A$: On exprime l'indice d'acide du produit à caractériser en milligrammes de potasse équivalente par gramme de produit. Pour cela, on effectue un dosage acido-basique dans les conditions suivantes : un poids exact p de produit (environ 10 grammes) est dissout dans 50 ml d'un mélange toluène / éthanol (2 vol / 1 vol). Après dissolution complète, on dose avec une solution de potasse méthanolique de titre normal N (Eq/l) exact d'environ 0,1 N. Le point équivalent est détecté par une électrode combinée asservissant une burette automatique (appareil de titration automatique « 716 DMS Titrino »® Metrohm) délivrant le volume équivalent $V_E$. Après réalisation d'un essai à blanc (50 ml du mélange toluène / éthanol seul) qui permet de déterminer le volume équivalent $V_B$, on calcule l'indice d'acide (IA) par la formule suivante :

$$I_A = (V_E - V_B).N.56{,}1 / p$$

avec $V_E$ et $V_B$ en ml, N en Eq / l et p en gramme.

Détermination de l'indice d'isocyanate ($I_{NCO}$) : On exprime l'indice d'isocyanate du produit à caractériser en mg KOH équivalent par gramme de produit. Pour cela, on effectue un dosage acido-basique en retour de l'excès de dibutyle amine par rapport aux fonctions isocyanates dans les conditions suivantes : un poids exact p de produit (environ 1 gramme) est dissout dans environ 50 ml de toluène. Après dissolution complète, on ajoute exactement 15 ml d'une solution de Dibutyle amine ayant un titre d'environ 0,15 N (solution de 20 g de Dibutyle amine dans 1000 ml de Toluène : 20 g/l), puis on laisse réagir 15 min à température ambiante. On dose ensuite l'excès de Dibutyle amine avec une solution aqueuse d'acide chlorhydrique de titre normal N (Eq/l) exact d'environ 0,1 N. Le point équivalent est détecté par une électrode combinée (LiCl METROHM référence 6.0222.100) asservissant une burette automatique (appareil de titration automatique « 716 DMS Titrino »® Metrohm) délivrant le volume équivalent $V_E$. Un essai à blanc (15 ml de solution de dibutyle amine additionnée de 50 ml de toluène) est également réalisé avec un volume équivalent $V_B$. On calcule l'indice d'isocyanate ($I_{NCO}$) par la formule suivante :

$$I_{NCO} = (V_E - V_B).N.56{,}1 / p$$

avec $V_E$ et $V_B$ en ml, N en Eq/l et p en gramme.

Détermination de l'indice d'amine total $I_{AmT}$ : Cet indice d'amine englobe l'amine secondaire résiduelle en cours de réaction (si le cas pour prélèvements), l'amine tertiaire éventuellement portée par l'aminoalcool de départ et l'amine tertiaire de l'aminoacrylate formé. On exprime l'indice d'amine total du produit à caractériser en mg KOH équivalent par gramme de produit. Pour cela, on effectue un dosage acido-basique direct dans les conditions suivantes : un poids exact p de produit (exactement 1 gramme) est dissout dans environ 40 ml d'acide acétique glacial. On dose la basicité par une solution d'acide perchlorique dans l'acide acétique glacial de titre normal N (en Eq/l) exact d'environ 0,1 N. Le point équivalent est détecté par une électrode de verre (remplie avec une solution de perchlorate de lithium à 1 mole par litre dans l'acide acétique glacial) asservissant une burette automatique (appareil de titration automatique « 716 DMS Titrino »® Metrohm) délivrant le volume équivalent $V_E$. On calcule l'indice d'amine total ($I_{AmT}$) par la formule suivante :

$$I_{AmT} = V_E.N.56{,}1 / p$$

avec $V_E$ en ml, N en Eq/l et p en gramme.

Détermination de l'indice d'amine tertiaire $I_{Am3}$ : On exprime l'indice d'amine tertiaire du produit à caractériser en milligrammes de potasse équivalente par gramme de produit. Pour cela, on effectue un dosage acido-basique direct des fonctions amine tertiaires (après qu'un excès d'anhydride acétique ait converti les amines primaires et secondaires en amides non salifiables par l'acide perchlorique) dans les conditions suivantes : un poids exact p de produit (environ 1 gramme) est introduit dans environ 10 ml d'anhydride acétique. On laisse réagir 5 min à température ambiante, puis on dilue par un ajout d'environ 50 ml de dichlorométhane. On dose alors la basicité par une solution d'acide perchlorique dans le dichlorométhane de titre normal N (en Eq/l) exact d'environ 0,1 N. Le point équivalent est détecté par une électrode de verre (remplie avec une solution de perchlorate de lithium à 1 mole (1 Eq) par litre dans l'acide acétique glacial) asservissant une burette automatique (appareil de titration automatique « 716 DMS Titrino »® Metrohm) délivrant le volume équivalent $V_E$. On calcule l'indice d'amine total ($I_{Am3}$) par la formule suivante :

$$I_{Am3} = V_E.N.56{,}1 / p$$

avec $V_E$ en ml, N en Eq/l et p en gramme.

3) Formulation et évaluation des revêtements (vernis) photoréticulables

3.1) Sous lampe fusion

On réalise, par simple mélange à température ambiante, le mélange de composition centésimale suivante :

Acrylate :        96,0
DC 1173 :        4,0

On obtient une formulation pour photoréticulation sous lampe UV Fusion, F-fus dont les résultats comparatifs sont rassemblés dans le tableau 3 ci-dessous.

Tableau 3 : Photoréticulation par lampe « Fusion »

| Paramètre | Unité | Ref-U1 | Ref-U2 | UAmAA-1 | UAmAA-2 | UAmAA-3 |
|---|---|---|---|---|---|---|
| Réactivité | m/min | 55 | 10 | 45 | 50 | 60 |
| Dureté Persoz | seconde | 320 | 330 | 207 | 251 | 303 |
| Flexibilité | mm | > 25 | > 25 | 10 | 20 | > 25 |
| Résistance acétone | seconde | > 300 | > 300 | > 300 | > 300 | > 300 |
| "Curling" | -- à ++ | -- | + | ++ | + | - |
| Retrait | % | 9,4 | 6,0 | 4,5 | 2,5 | 4,4 |

3.2) Sous lampe LED

On réalise, par simple mélange à température ambiante, le mélange de composition centésimale suivante :

Acrylate :        94,5
TPO :        2,5
DETX:        3,0

On obtient une formulation pour photoréticulation sous lampe LED F-led dont les résultats comparatifs sont rassemblés dans le tableau 4 ci-dessous.

Tableau 4 : Photoréticulation par lampe « LED »

| Paramètre | Unité | Ref-U1 | UAmAA-1 | UAmAA-2 | UAmAA-3 |
|---|---|---|---|---|---|
| Réactivité | m/min | 5 | 40 | 20 | 55 |
| Dureté Persoz | seconde | 333 | 245 | 274 | 292 |
| Flexibilité | mm | 25 | 8 | 10 | 16 |
| Résistance acétone | seconde | 300 | 300 | 300 | 300 |

Tests et méthodes utilisés

Détermination de la réactivité sous lampe fusion : La formulation F-fus est appliquée en film de 12 $\mu$m sur une carte contraste (« Penoparc charts form 1B »® Leneta), puis elle est réticulée à l'aide d'une lampe Fusion Hg à 120 W/cm$^2$. On mesure la vitesse minimale de passage nécessaire (en m/min) pour obtenir un film sec au toucher.
Détermination de la réactivité sous LED : La formulation F-led est appliquée en film de 12 $\mu$m sur une carte contraste (« Penoparc charts form 1B»® Leneta), puis elle est réticulée à l'aide d'une lampe LED de longueur d'onde $\lambda$ = 395 nm à 12 W/cm$^2$. On mesure la vitesse minimale de passage nécessaire (en m/min) pour obtenir un film sec au toucher.
Pour les tests suivants de dureté, flexibilité et de résistance à l'acétone, les films photoréticulés sont laissés en salle climatisée (T = 23°C) pendant 24 heures après réticulation et avant les mesures.

Détermination du « Curling » : La formulation est appliquée en film de 12 µm sur une carte contraste (« Penoparc charts form 1B »® Leneta), puis elle est réticulée à l'aide d'une lampe Fusion Hg à 120 W/cm à 5 m/min pour obtenir un film sec au toucher.

On évalue ensuite de façon comparative (semi-quantitative) la courbure des cartes Leneta :

Très recourbée (- -)
Recourbée (-)
Légèrement recourbée (+)
Plane (++)

Détermination du retrait

Préparation du film : La formulation est appliquée en film de 200 µm sur un substrat siliconé anti-adhérent, puis on pré-réticule sous UV à l'aide d'une lampe Fusion Hg à 120 W/cm à 50 m/min. Le film ainsi obtenu est décollé du substrat, puis placé entre 2 plaques de verre pour réticulation complète par 5 passages à 5 m/min sous UV à l'aide d'une lampe Fusion Hg à 120 W/cm.

Mesure des densités : On mesure la densité $d_m$ de l'acrylate monomère avant réticulation (liquide, à 25°C) avec un pycnomètre, puis la densité $d_p$ du polymère après réticulation telle que décrite ci-haut (solide, à 25°C) à l'aide d'une balance Mettler Toledo XS204 DeltaRAnge®.

Calcul du retrait volumique : Le retrait volumique Rv est calculé à l'aide de la formule suivante : Rv (%) = $100.(d_p - d_m)/d_p$.

Détermination de la dureté Persoz selon norme ISO 1522 : La formulation à examiner est appliquée en film de 100 µm sur une plaque en verre et réticulée par une lampe Fusion Hg 120 W/cm à une vitesse de 8 m/min.

On mesure le nombre d'oscillations avant l'amortissement des oscillations (passage de 12° à 4° d'amplitude) d'un pendule au contact de la plaque de verre revêtue, d'après la norme ISO 1522.

Détermination de la flexibilité : La formulation est appliquée en film de 100 µm sur une plaque en acier lisse de 25/10 mm d'épaisseur (D-46® Q-Panel), puis réticulée par une lampe Fusion Hg 120 W/cm à une vitesse de 8 m/min.

On courbe la plaque revêtue sur des mandrins cylindriques d'après la norme ISO 1519. On exprime le résultat par la valeur (en mm) du rayon de courbure le plus faible qu'on peut infliger au revêtement sans qu'il ne se fissure, ni se décolle du support.

Détermination de la résistance à l'acétone : La formulation est appliquée en film de 12 µm sur une plaque en verre, puis réticulée par une lampe Fusion Hg 120 W/cm à une vitesse de 8 m/min. On frotte le revêtement avec un chiffon imbibé d'acétone. Le résultat est le temps (exprimé en seconde) au-delà duquel le film se décolle et/ou se désagrège.

Calcul de la masse moléculaire moyenne en nombre Mn : La masse moléculaire moyenne de l'UAmAA est donnée en g/mole (Dalton) par la formule suivante :

$$Mn = r1.r2/fa2).fb.MM1 + r2.fb.MM2 + MM3$$

MM1, MM2 et MM3 étant les masses molaires respectives de l'acrylate a2), de l'amine hydroxylée (aminoalcool) a1) et du polyisocyanate b).

Calcul de la fonctionnalité moyenne en nombre en acrylate (en Eq acrylate/mole) :

$$f_{Acr} = r2.fb.(r1 - 1)$$

Calcul du taux de groupement aminoacrylate (en mEq/g) :

$$t_{Aa} = 1000.r2.fb/M$$

Calcul de la densité d'acrylate (en mEq/g) :

$$d_A = 1000.r2.fb.(r1-1)/M$$

**Revendications**

1.  Uréthane aminoacrylate-acrylate **caractérisé en ce qu'**il comprend au moins deux fonctions uréthanes liées à un groupement aminoacrylate, ce dernier étant porteur d'un ou de plusieurs groupements acrylates, de préférence d'au moins 2 et plus préférentiellement d'au moins 3 groupements acrylates et **en ce qu'**il dérive de la réaction de a) un aminoacrylate hydroxylé porteur d'un ou de plusieurs groupements acrylate avec b) un polyisocyanate, les groupements hydroxy étant en excès par rapport aux groupements isocyanates du polyisocyanate b) avec,

    - ledit aminoacrylate a) étant le produit d'addition de a1) un aminoalcool porteur d'un groupement hydroxy et d'un groupement amine secondaire et en option porteur à la fois d'un groupement amine secondaire et tertiaire, sur a2) au moins un acrylate multifonctionnel de fonctionnalité ou de fonctionnalité moyenne en nombre en acrylates fa2 allant de 2 à 6 par mole, avec a2) étant en excès stoechiométrique de groupements acrylates par rapport aux groupements amine secondaire -NH dudit aminoalcool a1), avec un rapport r1 en groupements r1 = acrylate/NH > 1, en particulier d'au moins 1,2, plus particulièrement d'au moins 1,5 et encore plus particulièrement d'au moins 2,
    - le rapport r2 en groupements r2 = OH/NCO > 1 et jusqu'à 1,4, en particulier allant de 1,05 à 1,4 et de préférence de 1,05 à 1,2,
    - ledit uréthane aminoacrylate-acrylate contenant un taux $t_{Aa}$ en groupements aminoacrylates, exprimé en milliéquivalent par gramme (mEq/g) dudit uréthane aminoacrylate-acrylate allant de 0,3 à 6,0 et de préférence de 0,4 à 5,0 et plus préférentiellement de 0,6 à 4,0.

2.  Uréthane aminoacrylate-acrylate selon la revendication 1, **caractérisé en ce qu'**il a une densité $d_A$ de groupements acrylates allant de 0,4 à 12,0, de préférence de 1,3 à 12, plus préférentiellement de 2 à 12 mEq/g dudit uréthane aminoacrylate-acrylate.

3.  Uréthane aminoacrylate-acrylate selon la revendication 1 ou 2, **caractérisé en ce qu'**il a une fonctionnalité moyenne en nombre en acrylate $f_{Acr}$ allant de 0,4 à 60, de préférence de 1 à 15, plus préférentiellement de 2 à 15, plus préférentiellement de 3 à 10 acrylates par mole dudit uréthane aminoacrylate-acrylate.

4.  Uréthane aminoacrylate-acrylate selon l'une des revendications 1 à 3, **caractérisé en ce que** le rapport r1 en groupements r1 = acrylate/NH varie de $fa_2/(fa_2-1)$ à $2.fa_2$, de préférence de $fa_2/(fa_2-2)$ à $1,5.fa_2$ quand $fa_2$ est d'au moins 3, avec $fa_2$ étant la fonctionnalité ou fonctionnalité moyenne en nombre, si mélange, dudit acrylate a2) exprimée en acrylate/mole de a2).

5.  Uréthane aminoacrylate-acrylate selon l'une des revendications 1 à 4, **caractérisé en ce que** ledit polyisocyanate b) a une fonctionnalité fb ou fonctionnalité moyenne en nombre allant de 2 à 4, de préférence de 2 à 3,5.

6.  Uréthane aminoacrylate-acrylate selon la revendication 5, **caractérisé en ce que** ledit polyisocyanate est sélectionné parmi les polyisocyanates aliphatiques, cycloaliphatiques ou aromatiques ou leurs dérivés trimères biurets ou triisocyanurates ou lesdits polyisocyanates modifiés allophanates.

7.  Uréthane aminoacrylate-acrylate selon l'une des revendications 1 à 6, **caractérisé en ce que** ledit aminoalcool a1) est sélectionné parmi les aminoalcools définis par la formule générale suivante : $R_1$-NH-$R_2$-OH, avec $R_1$ étant alkyle en $C_1$ à $C_4$ et $R_2$ étant un alkylène en $C_2$ à $C_{12}$, de préférence en $C_2$ à $C_6$ ou cycloalkylène ou aralkylène.

8.  Uréthane aminoacrylate-acrylate selon la revendication 7, **caractérisé en ce que** ledit aminoalcool est choisi parmi : N-méthyl éthanol amine, N-isobutyl éthanol amine, N-éthyl éthanol amine, N-butyl éthanol amine, N-(2-Hydroxyéthyl)Pipérazine).

9.  Uréthane aminoacrylate-acrylate selon l'une des revendications 1 à 8, **caractérisé en ce que** ledit acrylate multifonctionnel a2) est un monomère acrylate multifonctionnel qui est un ester acrylate d'un alkylène polyol en $C_2$ à $C_{10}$, ledit alkylène pouvant comprendre une liaison éther ou d'un polyol cycloaliphatique, lesdits polyols ayant une fonctionnalité allant de 2 à 6.

10. Uréthane aminoacrylate-acrylate selon l'une des revendications 1 à 9, **caractérisé en ce que** ledit acrylate multifonctionnel a2) est un mélange d'au moins deux acrylates multifonctionnels et en option ledit aminoalcool a1) est également un mélange d'au moins deux aminoalcools.

**11.** Uréthane aminoacrylate-acrylate selon l'une des revendications 1 à 10, **caractérisé en ce qu'**il a une viscosité à 60°C mesurée par la méthode Noury selon la norme AFNOR XP.T51-213, variant de 1 à 20 et de préférence de 5 à 15 Pa.s.

**12.** Procédé de préparation d'un uréthane aminoacrylate-acrylate tel que défini selon l'une des revendications 1 à 11, **caractérisé en ce qu'**il comprend les étapes suivantes :

i) préparation dudit aminoacrylate hydroxylé a) par réaction d'addition de Michael dudit aminoalcool a1) sur ledit acrylate multifonctionnel a2), ce dernier étant en excès stoechiométrique par rapport aux groupements NH dudit aminoalcool a1) avec le rapport de groupements r1 = acrylates/N-H étant > 1, en particulier d'au moins 1,2, plus particulièrement d'au moins 1,5 et encore plus particulièrement d'au moins 2,0

ii) réaction dudit aminoacrylate a) de l'étape i) avec ledit polyisocyanate b) avec un rapport r2 = OH/NCO allant de 1,05 à 1,40, de préférence de 1,05 à 1,20 pour obtenir ledit uréthane aminoacrylate-acrylate.

**13.** Composition réticulable de liant organique, **caractérisée en ce qu'**elle comprend comme liant, au moins un uréthane acrylate tel que défini selon l'une des revendications 1 à 11 ou obtenu par un procédé tel que défini selon la revendication 12.

**14.** Composition selon la revendication 13, **caractérisée en ce qu'**elle comprend en plus dudit liant au moins un diluant réactif choisi parmi les monomères (méth)acrylates mono ou multifonctionnels, de préférence parmi les monomères acrylates multifonctionnels, plus particulièrement lesdits monomères multifonctionnels ayant une fonctionnalité allant de 2 à 6, de préférence de 2 à 4.

**15.** Composition selon la revendication 14, **caractérisée en ce qu'**elle est réticulable par rayonnement ou par voie peroxyde ou par voie mixte ou par voie d'addition de Michael avec une polyamine.

**16.** Composition selon la revendication 14 ou 15, **caractérisée en ce qu'**elle est réticulable sous rayonnement choisi parmi, UV, LED, laser, faisceau d'électrons, en particulier LED.

**17.** Composition selon l'une des revendications 14 à 16, **caractérisée en ce qu'**il s'agit d'une composition de revêtement, en particulier d'encre, vernis, peinture ou d'adhésif ou une composition pour impression 3D ou pour fabrication d'objets 3D par couches successives, d'agents d'étanchéité, de scellement chimique, de béton ou de composite.

**18.** Utilisation d'un uréthane aminoacrylate-acrylate tel que défini selon l'une des revendications 1 à 11 ou obtenu par un procédé tel que défini selon la revendication 12 dans des compositions réticulables.

**19.** Utilisation telle que définie selon la revendication 18, **caractérisée en ce qu'**elle concerne les revêtements, l'impression 3D, la fabrication d'objets 3D par couches successives, les agents d'étanchéité, le scellement chimique, le béton ou les composites.

**20.** Utilisation telle que définie selon la revendication 18 ou 19, **caractérisée en ce que** ledit uréthane aminoacrylate-acrylate est utilisé comme agent synergiste de réticulation dans des compositions réticulables sous rayonnement, en particulier UV, laser ou LED, en particulier LED.

**21.** Utilisation selon l'une des revendications 18 à 20, **caractérisée en ce que** ledit uréthane aminoacrylate-acrylate est utilisé comme liant agent synergiste de réticulation sous UV.

**22.** Produit fini réticulé, **caractérisé en ce qu'**il dérive de la réticulation d'au moins un uréthane aminoacrylate-acrylate tel que défini selon l'une des revendications 1 à 11 ou obtenu par le procédé tel que défini selon la revendication 12 ou d'une composition réticulable le contenant selon l'une des revendications 13 à 17.

**23.** Produit tel que défini selon la revendication 22, **caractérisé en ce qu'**il est choisi parmi : revêtement, en particulier peinture, vernis, encre, adhésif ou parmi produit obtenu par impression 3D, produit 3D obtenu par couches successives, joint d'étanchéité ou de scellement chimique ou béton ou composite.

**Patentansprüche**

1. Urethanaminoacrylatacrylat, **dadurch gekennzeichnet, dass** es mindestens zwei Urethanfunktionen umfasst, die an eine Aminoacrylatgruppe gebunden sind, wobei letztere eine oder mehrere Acrylatgruppen, vorzugsweise mindestens zwei und weiter bevorzugt mindestens drei Acrylatgruppen trägt, und dass es sich von der Umsetzung von a) einem Hydroxylaminoacrylat mit einer oder mehreren Acrylatgruppen mit b) einem Polyisocyanat ableitet, wobei die Hydroxygruppen im Überschuss in Bezug auf die Isocyanatgruppen des Polyisocyanats b) vorliegen, wobei

   - es sich bei dem Aminoacrylat a) um das Produkt der Addition von a1) einem Aminoalkohol mit einer Hydroxygruppe einer sekundären Amingruppe und gegebenenfalls sowohl einer sekundären als auch einer tertiären Amingruppe an a2) mindestens ein multifunktionelles Acrylat mit einer Acrylatfunktionalität oder zahlenmittleren Acrylatfunktionalität $fa2$ im Bereich von 2 bis 6 pro Mol handelt, wobei a2) in stöchiometrischem Überschuss von Acrylatgruppen in Bezug auf die sekundären Amingruppen -NH des Aminoalkohols a1) vorliegt, wobei ein Verhältnis $r1$ von Gruppen $r1 = $ Acrylat/NH $> 1$ ist und insbesondere mindestens 1,2, spezielle mindestens 1,5 und noch spezieller mindestens 2 beträgt,
   - das Verhältnis $r2$ von Gruppen $r2 = $ OH/NCO $> 1$ ist und bis zu 1,4 beträgt und insbesondere im Bereich von 1,05 bis 1,4 und vorzugsweise von 1,05 bis 1,2 liegt,
   - das Urethanaminoacrylatacrylat einen Gehalt $t_{Aa}$ von Aminoacrylatgruppen, ausgedrückt in Milliäquivalent pro Gramm (mEq/g) des Urethanaminoacrylatacrylats, im Bereich von 0,3 bis 6,0 und vorzugsweise von 0,4 bis 5,0 und weiter bevorzugt von 0,6 bis 4,0 aufweist.

2. Urethanaminoacrylatacrylat nach Anspruch 1, **dadurch gekennzeichnet, dass** die Dichte $d_A$ von Acrylatgruppen im Bereich von 0,4 bis 12,0, vorzugsweise von 1,3 bis 12, weiter bevorzugt von 2 bis 12 mEq/g des Urethanaminoacrylatacrylats liegt.

3. Urethanaminoacrylatacrylat nach Anspruch 1 oder 2, **dadurch gekennzeichnet, dass** es eine zahlenmittlere Acrylatfunktionalität $f_{Acr}$ im Bereich von 0,4 bis 60, vorzugsweise von 1 bis 15, weiter bevorzugt von 2 bis 15, weiter bevorzugt von 3 bis 10 Acrylaten pro Mol des Urethanaminoacrylatacrylats aufweist.

4. Urethanaminoacrylatacrylat nach einem der Ansprüche 1 bis 3, **dadurch gekennzeichnet, dass** das Verhältnis $r1$ von Gruppen $r1 = $ Acrylat/NH von $fa_2/(fa_2-1)$ bis $2.fa_2$, vorzugsweise von $fa_2/(fa_2-2)$ bis $1,5.fa_2$, wenn $fa_2$ mindestens 3 ist, variiert, wobei $fa_2$ für die Funktionalität oder zahlenmittlere Funktionalität, wenn es sich um eine Mischung handelt, des Acrylats a2), ausgedrückt in Acrylat/mol a2), steht.

5. Urethanaminoacrylatacrylat nach einem der Ansprüche 1 bis 4, **dadurch gekennzeichnet, dass** das Polyisocyanat b) eine Funktionalität fb oder zahlenmittlere Funktionalität im Bereich von 2 bis 4, vorzugsweise von 2 bis 3,5, aufweist.

6. Urethanaminoacrylatacrylat nach Anspruch 5, **dadurch gekennzeichnet, dass** das Polyisocyanat aus aliphatischen, cycloaliphatischen oder aromatischen Polyisocyanaten oder Biurettrimer- oder Triisocyanurat-Derivaten davon oder den Polyisocyanaten, die allophanatmodifiziert wurden, ausgewählt sind.

7. Urethanaminoacrylatacrylat nach einem der Ansprüche 1 bis 6, **dadurch gekennzeichnet, dass** der Aminoalkohol a1) aus den durch die nachstehende allgemeine Formel definierten Aminoalkoholen ausgewählt ist: $R_1$-NH-$R_2$-OH, wobei $R_1$ für $C_1$- bis $C_4$-Alkyl steht und $R_2$ für $C_2$- bis $C_{12}$- und vorzugsweise $C_2$- bis $C_6$-Alkylen oder Cycloalkylen oder Aralkylen steht.

8. Urethanaminoacrylatacrylat nach Anspruch 7, **dadurch gekennzeichnet, dass** der Aminoalkohol aus N-Methylethanolamin, N-Isobutylethanolamin, N-Ethylethanolamin, N-Butylethanolamin und N-(2-Hydroxyethyl)piperazin ausgewählt ist.

9. Urethanaminoacrylatacrylat nach einem der Ansprüche 1 bis 8, **dadurch gekennzeichnet, dass** es sich bei dem multifunktionellen Acrylat a2) um ein multifunktionelles groß acrylat-Monomeren handelt, bei dem es sich um einen Acrylatester eines $C_2$- bis $C_{10}$-Alkylenpolyols, wobei das Alkylen eine Etherbindung enthalten kann, oder eines cycloaliphatischen Polyols handelt, wobei die Polyole eine Funktionalität im Bereich von 2 bis 6 aufweisen.

10. Urethanaminoacrylatacrylat nach einem der Ansprüche 1 bis 9, **dadurch gekennzeichnet, dass** es sich bei dem multifunktionellen Acrylat a2) um eine Mischung von mindestens zwei multifunktionellen Acrylaten handelt und es sich gegebenenfalls bei dem Aminoalkohol a1) ebenfalls um eine Mischung von mindestens zwei Aminoalkoholen handelt.

11. Urethanaminoacrylatacrylat nach einem der Ansprüche 1 bis 10, **dadurch gekennzeichnet, dass** es eine nach der Noury-Methode gemäß der AFNOR-Norm XP.T51-213 gemessene Viskosität bei 60 °C im Bereich von 1 bis 20 und vorzugsweise von 5 bis 15 Pa.s aufweist.

12. Verfahren zur Herstellung eines Urethanaminoacrylatacrylats gemäß einem der Ansprüche 1 bis 11, **dadurch gekennzeichnet, dass** es die folgenden Schritte umfasst:

   i) Herstellung des Hydroxylaminoacrylats a) durch Michael-Additionsreaktion des Aminoalkohols a1) mit dem multifunktionellen Acrylat a2), wobei letzteres in stöchiometrischen Überschuss in Bezug auf die NH-Gruppen des Aminoalkohols a1) vorliegt, wobei das Verhältnis von Gruppen $r1$ = Acrylate/N-H > 1 ist und insbesondere mindestens 1,2, spezielle mindestens 1,5 und noch spezieller mindestens 2,0 beträgt,
   ii) Umsetzung des Aminoacrylats a) aus Schritt i) mit dem Polyisocyanat b) mit einem Verhältnis $r2$ = OH/NCO im Bereich von 1,05 bis 1,40 und vorzugsweise von 1,05 bis 1,20 zum Erhalt des Urethanaminoacrylatacrylats.

13. Vernetzbare Zusammensetzung von organischem Bindemittel, **dadurch gekennzeichnet, dass** sie als Bindemittel mindestens ein Urethanacrylat gemäß einem der Ansprüche 1 bis 11 oder durch ein Verfahren gemäß Anspruch 12 erhaltenes Urethanacrylat umfasst.

14. Zusammensetzung nach Anspruch 13, **dadurch gekennzeichnet, dass** sie neben dem Bindemittel mindestens ein reaktives Verdünnungsmittel, das aus mono- oder multifunktionellen (Meth)acrylat-Monomeren, vorzugsweise aus multifunktionellen Acrylat-Monomeren, ausgewählt ist, wobei die multifunktionellen Monomere eine Funktionalität im Bereich von 2 bis 6 und vorzugsweise von 2 bis 4 aufweisen, umfasst.

15. Zusammensetzung nach Anspruch 14, **dadurch gekennzeichnet, dass** sie durch Strahlung oder auf peroxidischem Wege oder auf gemischtem Wege oder durch Michael-Addition mit einem Polyamin vernetzbar ist.

16. Zusammensetzung nach Anspruch 14 oder 15, **dadurch gekennzeichnet, dass** sie unter Strahlung, die aus UV, LED, Laser und Elektronenstrahl, insbesondere LED, ausgewählt ist, vernetzbar ist.

17. Zusammensetzung nach einem der Ansprüche 14 bis 16, **dadurch gekennzeichnet, dass** es sich um eine Beschichtungszusammensetzung, insbesondere eine Tinten-, Lack-, Anstrichmittel- oder Klebstoffzusammensetzung, oder eine Zusammensetzung für den 3D-Druck oder zur schichtweisen Herstellung von 3D-Objekten, eine Dichtungszusammensetzung, eine Zusammensetzung zur chemischen Verkapselung, eine Betonzusammensetzung oder eine Verbundwerkstoffzusammensetzung handelt.

18. Verwendung eines Urethanaminoacrylatacrylats gemäß einem der Ansprüche 1 bis 11 oder eines durch ein Verfahren gemäß Anspruch 12 erhaltenen Urethanaminoacrylatacrylats in vernetzbaren Zusammensetzungen.

19. Verwendung gemäß Anspruch 18, **dadurch gekennzeichnet, dass** sie Beschichtungen, den 3D-Druck, die schichtweise Herstellung von 3D-Objekten, Dichtungsmittel, die chemische Verkapselung, Beton oder Verbundwerkstoffe betrifft.

20. Verwendung gemäß Anspruch 18 oder 19, **dadurch gekennzeichnet, dass** das Urethanaminoacrylatacrylat als synergistisches Mittel zur Vernetzung unter Strahlung, insbesondere UV, Laser oder LED, insbesondere LED, vernetzbaren Zusammensetzungen Verwendet wird.

21. Verwendung nach einem der Ansprüche 18 bis 20, **dadurch gekennzeichnet, dass** das Urethanaminoacrylatacrylat als synergistisches Mittel zur Vernetzung unter UV verwendet wird.

22. Vernetztes fertiges Produkt, **dadurch gekennzeichnet, dass** es aus der Vernetzung mindestens eines Urethanaminoacrylatacrylats gemäß einem der Ansprüche 1 bis 11 oder durch das Verfahren gemäß Anspruch 12 erhaltenen Urethanaminoacrylatacrylats oder einer dieses vernetzbaren Zusammensetzung nach einem der Ansprüche 13 bis 17.

23. Produkt gemäß Anspruch 22, **dadurch gekennzeichnet, dass** es ausgewählt ist aus: einer Beschichtung, insbesondere einem Anstrichmittel, einem Lack, einer Tinte und Klebstoff, oder aus einem durch 3D-Druck erhaltenen Produkt, einem schichtweise erhaltenen 3D-Produkt, einer Dichtung oder einer chemischen Verkapselung oder Beton oder einem Verbundwerkstoff.

**Claims**

1. Urethane aminoacrylate-acrylate **characterized in that** it comprises at least two urethane functions bonded to an aminoacrylate group, the latter bearing one or more acrylate groups, preferably at least 2 and more preferentially at least 3 acrylate groups, and **in that** it is derived from the reaction of a) a hydroxylated aminoacrylate bearing one or more acrylate groups with b) a polyisocyanate, the hydroxyl groups being in excess relative to the isocyanate groups of the polyisocyanate b), with

    - said aminoacrylate a) being produced by the addition of a1) an amino alcohol bearing a hydroxyl group and a secondary amine group and optionally bearing both a secondary and a tertiary amine group, to a2) at least one multifunctional acrylate having an acrylate functionality or number-average acrylate functionality fa2 ranging from 2 to 6 per mole, with a2) being in stoichiometric excess of acrylate groups relative to the secondary amine groups -NH of said amino alcohol a1), with a ratio r1 of groups r1 = acrylate / NH > 1, in particular of at least 1.2, more particularly of at least 1.5 and even more particularly of at least 2,
    - the ratio r2 of groups r2 = OH / NCO > 1 and up to 1.4, in particular ranging from 1.05 to 1.4 and preferably from 1.05 to 1.2,
    - said urethane aminoacrylate-acrylate containing a content $t_{Aa}$ of aminoacrylate groups, expressed in milliequivalents per gram (mEq/g), of said urethane aminoacrylate-acrylate ranging from 0.3 to 6.0, preferably from 0.4 to 5.0 and more preferentially from 0.6 to 4.0.

2. Urethane aminoacrylate-acrylate according to Claim 1, **characterized in that** it has a density $d_A$ of acrylate groups ranging from 0.4 to 12.0, preferably from 1.3 to 12, more preferentially from 2 to 12 mEq/g of said urethane aminoacrylate-acrylate.

3. Urethane aminoacrylate-acrylate according to Claim 1 or 2, **characterized in that** it has a number-average acrylate functionality $f_{Acr}$ ranging from 0.4 to 60, preferably from 1 to 15, more preferentially from 2 to 15 and more preferentially from 3 to 10 acrylates per mole of said urethane aminoacrylate-acrylate.

4. Urethane aminoacrylate-acrylate according to one of Claims 1 to 3, **characterized in that** the ratio r1 of groups r1 = acrylate / NH ranges from $fa_2/(fa_2-1)$ to $2.fa_2$, preferably from $fa_2/(fa_2-2)$ to $1.5.fa_2$ when $fa_2$ is at least three 3, with $fa_2$ being the functionality or number-average functionality, if it is a mixture, of said acrylate a2) expressed in acrylate/mole of a2).

5. Urethane aminoacrylate-acrylate according to one of Claims 1 to 4, **characterized in that** said polyisocyanate b) has a functionality fb or number-average functionality ranging from 2 to 4, preferably from 2 to 3.5.

6. Urethane aminoacrylate-acrylate according to Claim 5, **characterized in that** said polyisocyanate is selected from aliphatic, cycloaliphatic or aromatic polyisocyanates or biuret trimer or triisocyanurate derivatives thereof or said polyisocyanates that have been allophanate-modified.

7. Urethane aminoacrylate-acrylate according to one of Claims 1 to 6, **characterized in that** said amino alcohol a1) is selected from the amino alcohols defined by the general formula below: $R_1$-NH-$R_2$-OH, with $R_1$ being $C_1$ to $C_4$ alkyl and $R_2$ being a $C_2$ to $C_{12}$ and preferably $C_2$ to $C_6$ alkylene or a cycloalkylene or aralkylene.

8. Urethane aminoacrylate-acrylate according to Claim 7, **characterized in that** said amino alcohol is chosen from: N-methylethanolamine, N-isobutylethanolamine, N-ethylethanolamine, N-butylethanolamine and N-(2-hydroxyethyl)piperazine).

9. Urethane aminoacrylate-acrylate according to one of Claims 1 to 8, **characterized in that** said multifunctional acrylate a2) is a multifunctional acrylate monomer which is an acrylate ester of a $C_2$ to $C_{10}$ alkylene polyol, said alkylene possibly comprising an ether bond, or of a cycloaliphatic polyol, said polyols having a functionality ranging from 2 to 6.

10. Urethane aminoacrylate-acrylate according to one of Claims 1 to 9, **characterized in that** said multifunctional acrylate a2) is a mixture of at least two multifunctional acrylates and optionally said amino alcohol a1) is likewise a mixture of at least two amino alcohols.

11. Urethane aminoacrylate-acrylate according to one of Claims 1 to 10, **characterized in that** it has a viscosity at 60°C, measured by the Noury method according to standard AFNOR XP.T51-213, ranging from 1 to 20 and preferably from 5 to 15 Pa.s.

12. Process for preparing a urethane aminoacrylate-acrylate as defined in one of Claims 1 to 11, **characterized in that** it comprises the following steps:

   i) preparing said hydroxylated aminoacrylate a) by Michael addition reaction of said amino alcohol a1) to said multifunctional acrylate a2), the latter being in stoichiometric excess relative to the NH groups of said amino alcohol a1), with the ratio of groups r1 = acrylates/N-H being > 1, in particular at least 1.2, more particularly at least 1.5 and even more particularly at least 2.0
   ii) reacting said aminoacrylate a) of step i) with said polyisocyanate b), with a ratio r2 = OH/NCO ranging from 1.05 to 1.40, preferably from 1.05 to 1.20, in order to obtain said urethane aminoacrylate-acrylate.

13. Curable composition of organic binder, **characterized in that** it comprises, as binder, at least one urethane acrylate as defined in one of Claims 1 to 11 or obtained by means of a process as defined in Claim 12.

14. Composition according to Claim 13, **characterized in that** it comprises, in addition to said binder, at least one reactive diluent chosen from monofunctional or multifunctional (meth)acrylate monomers, preferably from multifunctional acrylate monomers, said multifunctional monomers more particularly having a functionality ranging from 2 to 6, preferably from 2 to 4.

15. Composition according to Claim 14, **characterized in that** it is curable by radiation or by the peroxide route or by the mixed route or by Michael addition with a polyamine.

16. Composition according to Claim 14 or 15, **characterized in that** it is curable under radiation chosen from UV, LED, laser, and electron beam, in particular LED.

17. Composition according to one of Claims 14 to 16, **characterized in that** it is a coating composition, in particular an ink, varnish, paint or adhesive composition or a composition for 3D printing or for manufacturing 3D objects by laying down successive layers, a sealant composition, a chemical sealing composition, a concrete composition or a composite composition.

18. Use of a urethane aminoacrylate-acrylate as defined in one of Claims 1 to 11 or obtained by means of a process as defined in Claim 12, in curable compositions.

19. Use as defined in Claim 18, **characterized in that** it relates to coatings, 3D printing, the manufacturing of 3D objects by laying down successive layers, sealants, chemical sealing, concrete or composites.

20. Use as defined in Claim 18 or 19, **characterized in that** said urethane aminoacrylate-acrylate is used as a synergistic agent for curing in curable compositions under radiation, in particular UV, laser or LED radiation, in particular LED radiation.

21. Use according to one of Claims 18 to 20, **characterized in that** said urethane aminoacrylate-acrylate is used as a synergistic agent binder for UV-curing.

22. Cured finished product, **characterized in that** it is derived from the curing of at least one urethane aminoacrylate-acrylate as defined in one of Claims 1 to 11 or obtained by means of the process as defined in Claim 12 or of a curable composition containing the same according to one of Claims 13 to 17.

23. Product as defined in Claim 22, **characterized in that** it is chosen from: a coating, in particular paint, varnish, ink, adhesive, or from: a product obtained by 3D printing, a 3D product obtained by laying down successive layers, a seal or chemical sealing, or concrete or composite.